# EUROPEAN PATENT APPLICATION

(11) **EP 4 835 429 A1**
(43) Date of publication of application: **04.11.2026**
(21) Application number: 25173334.1
(22) Date of filing: 29.04.2025
(51) Int. Cl.: G01M 11/02, G01M 11/04

(54) **SYSTEM AND METHOD FOR AUTOMATIC TESTING OF AN OPTIC**

(71) Applicant: Dovideq Medical Systems B.V., 7556BV Hengelo (NL)
(72) Inventor: De Wit, Michiel Anne Tiemen, 7556BV Hengelo (NL)
(74) Representative: Custos IPC Coöperatie U.A.

(57) **Abstract**

The invention relates to a system (100) for automatic testing of an optic (4), such as an endoscope. The system comprises a measuring device (1) and a computing system (101), wherein the measuring device (1) comprises a camera (22), an optic mount (23) for mounting the optic in an optical path of the camera, and a lens system arranged in the optical path of the camera between the camera and the optic mount. The lens system and the camera are arranged to adjust a focus point of the camera along a longitudinal axis of the optic, and wherein the computing system is arranged to control the camera and to control the lens system to automatically adjust the focus point. The computing system (101) is further arranged for controlling the measuring device so as to move the focus point of the camera to different locations along the longitudinal axis, and controlling the camera to capture images at the different locations. The computing device registers a number of images taken by the camera, and processes at least some of the images using a machine learning model. The output of the machine learning model is used to determine a qualification of the optic.

## Description

### Field of the invention

This application relates to a system and method for automatic testing of an optic. The invention also relates to a computer program.

### Background art

Publication US2013/208106 A1 describes a device for testing an optic, such as an endoscope. The device comprises an optic mount for mounting the optic on the device. The device further comprises a test image holder for supporting a test image, a light source for lighting the test image via the optic, and a camera for detecting the lighted test image. The device also comprises guide means for the purpose of positioning and moving the test image holder along a substantially straight line relative to the camera.

The device also comprises a focussing element, a colour analyser and a moisture meter and a beam splitter arranged between the camera and the optic mount. The focussing element is arranged between the optic mount and the beam splitter. The image of test image visible via optic is incident upon beam splitter, such as a 50% light-transmitting mirror, via focussing element, such as a lens, in order to project the optical image to colour analyser and moisture meter. Using the detection means, such as the colour analyser, the moisture meter and the camera, the optic can be tested for respectively colour change of the lenses, for the presence of moisture in the lenses of optic and for the presence of a curvature in optic.

With camera of the device a recording can be made of the test image illuminated by the light source. The focussing element is adapted to focus on the lens transitions present in the optic, a recording of which can be made with the camera. The focussing element can be adjusted manually, wherein a person carrying out the test must focus focussing element on the transitions of successive lens parts. The focussing element is provided with adjusting means for focussing thereof at a desired distance in optic. The data of the tested optic can be entered via a computer by the person carrying out the test. A barcode scanner may be provided to read a barcode arranged on the optic. The bar code scanner is coupled to the computer for processing the read barcode, on the basis of which the computer can determine specific values from a database stored therein for successively focussing the focussing element on the successive transitions of the lens parts.

A drawback of the above-described system is that only known optics can be tested, and that their identification codes needs be stored upfront in a database. It is not possible to properly test unregistered optics. Furthermore, the system will only test the optics at the known transitions, such as a transition between consecutive optical elements within an optic. Testing of other locations in the optics is not supported for.

### Summary of the invention

According to a first aspect, there is provided a system for automatic testing of an optic, such as an endoscope, the system comprising a measuring device and a computing system. The measuring device comprises a camera, an optic mount for mounting the optic in an optical path of the camera, and a lens system arranged in the optical path of the camera between the camera and the optic mount. The lens system and the camera are arranged to adjust a focus point of the camera along a longitudinal axis of the optic. The computing system is arranged to control the camera and to control the lens system to automatically adjust the focus point.

The computing system is further arranged for controlling the measuring device so as to move the focus point of the camera to different locations along the longitudinal axis, and controlling the camera to capture images at different locations. The computing system registers (i.e. captures) a number of images taken by the camera. Next, the computing system processes at least some of the images using a machine learning model trained to classify images. An output of the machine learning model is then used to determine a qualification of the optic.

The present invention offers an automated method for testing an optic. The optic can be automatically tested along its complete optical path, not only at the predefined transitions. Furthermore, any arbitrary optical device, mountable on the measuring device can be tested, without the requirement of identification.

In an embodiment, processing at least some of the images comprises determining a sharpness value for the images, and storing the obtained sharpness value for the images to obtain a sharpness profile along the longitudinal axis of the optic. The processing also comprises identifying local peaks in the sharpness profile, and feeding peak images, which are those images that are taken at the locations of the local peaks, to a machine learning model. The output of the model is used for classification of the peak images. Finally, the classification of the peak images is used to determine a qualification of the optic.

In an embodiment, the registering of a number of images comprises adjusting the camera's exposure time to keep the brightness constant over the images taken. It is noted that If the image is overexposed, the particles are not clearly visible and the sharpness profile cannot be determined accurately. Consistent image brightness ensures that measurements remain repeatable and reliable.

In an embodiment, the computing system is arranged to register focus point location data for each image. It may be useful to know which image belongs to which location. This information can later be used by repairers, for example, to know exactly where a repair should be carried out.

In an embodiment, the camera is a digital video camera. Such a camera can be used to make separate images at different locations along the optical axis of the optic, and it can also be used to make a video while moving the focus point along the optical axis of the optic. The latter contains more image information than a few separate images, as it provides a continuous stream of visual data, including potentially blurry but still informative frames.

In an embodiment, the computing system is arranged to, before feeding the images to the machine learning model, adjust the lens system or camera so as to move the focus point back to the locations of the local peaks, and control the camera to take further images at the locations of the peaks. This may provide for sharper images at the identified peaks which enables the machine learning model to improve the classification.

In an embodiment, the sharpness of the image is determined using the Tenengrad algorithm. The Tenengrad algorithm is a technique for measuring image sharpness based on gradient magnitude. The Tenengrad method evaluates image sharpness based on edge strength. It relies on the so-called Sobel operator, which detects intensity variations in both horizontal and vertical directions.

In an embodiment, the at least some of the images are encoded into compressed or abstract feature representations. The images may be separate images taken by a photo camera or video frames taken by a video camera. These images or feature representations are then fed into the trained machine learning model. This machine learning model may be a neural network, but other models are possible such as traditional machine learning methods, including Support Vector Machines (SVM), k-Nearest Neighbours (KNN), Decision Trees, and custom feature engineering. Alternatively, more advanced architectures such as Vision Transformers (ViTs) may also be employed.

Such learning models may be trained using training sets comprising a number of images or video frames of the inner of optical devices such as an endoscope. The learning model may be trained to recognize all sorts of defect within an optic. One defect is referred to as glue degradation, which classification is triggered using images showing a growing organism. Another defect is referred to as moisture.

A further defect may be the presence of particles. When the camera is focused, particle appears solid.

Yet a further defect may be a broken rod lens, in which case dark shadows on the edges are visible. Dark circular bubble patterns indicate some sort of crack on the lens of the optic.

In an embodiment, the machine learning model comprises a convolutional neural network (CNN). Such networks are very suitable for classification of images. The convolutional neural network may comprise a feature extractor, a pooling layer, a first fully connected layer, a second fully connected layer, and an output layer. Further layers are possible depending on the training set and the requirements of the user.

In an embodiment, the feature extractor comprises multiple layers of a pre-trained convolutional neural network, such as MobileNet. Using pretrained layers and add other layers for the particular classification, will shorten the training time for the network. Furthermore, less training data is needed.

In an embodiment the weights between the first fully connected layer and the second fully connected layer are adjusted by the computing system during a further training phase using a data set comprising images of optics of the same type, or similar type, as the optic to be tested. The computing system may be arranged for initializing the weights of the neural network; feeding input data through the network; calculating the loss using a predefined loss function; performing backpropagation to compute the gradient of the loss with respect to the weights; updating the weights using an optimization algorithm such as stochastic gradient descent (SGD); repeating the above steps for a predefined number of epochs or until a convergence criterion is met.

According to a further aspect, there is provided a method for automatic testing of an optic, the method comprising:
- controlling a camera and a lens system of a measuring device, so as to move the focus point of the camera to different locations along a longitudinal axis of the optic;
- registering a number of images taken by the camera;
- processing at least some of the images using a machine learning model trained to classify images;
- using an output of the machine learning model to determine a qualification of the optic.

In an embodiment of the method, the processing of at least some of the images comprises:
- determining a sharpness value for the images;
- storing the obtained sharpness value the images to obtain a sharpness profile along the longitudinal axis of the optic;
- identifying local peaks in the sharpness profile;
- feeding peak images, which are those images that are taken at the locations of the local peaks, to the machine learning model.

According to yet a further aspect, there is provided a computer program comprising instructions configured to, when loaded on one or more processing units of a computing device, perform the method as described above.

### Brief description of the drawings

These and other aspects of the invention are apparent from and will be elucidated with reference to the embodiments described hereinafter. In the drawings,
Figure 1 schematically shows a measuring device for automatic testing of an optic according to an embodiment of the invention;
Figure 2 schematically shows a system for automatic testing of an optic according to an embodiment of the invention;
Figure 3 shows an example of a sharpness profile with a lens sharpness value as a function of a lens distance;
Figure 4A shows an image taken at the location of the first peak of the sharpness profile of Figure 3;
Figure 4B shows an image taken at the location of the second peak of Figure 3;
Figure 4C shows an image taken at the location of the third peak of Figure 3;
Figure 5 shows a photo taken of a test image;
Figure 6 shows the images of Figures 4A, 4B, 4C and 5 as input for a trained CNN;
Figure 7 schematically shows the CNN according to an embodiment of the invention;
Figure 8 shows a flow chart of a method for testing of an optic according to an embodiment of the invention.

It should be noted that items which have the same reference numbers in different Figures, have the same structural features and the same functions, or are the same signals. Where the function and/or structure of such an item has been explained, there is no necessity for repeated explanation thereof in the detailed description.

### Detailed description of embodiments

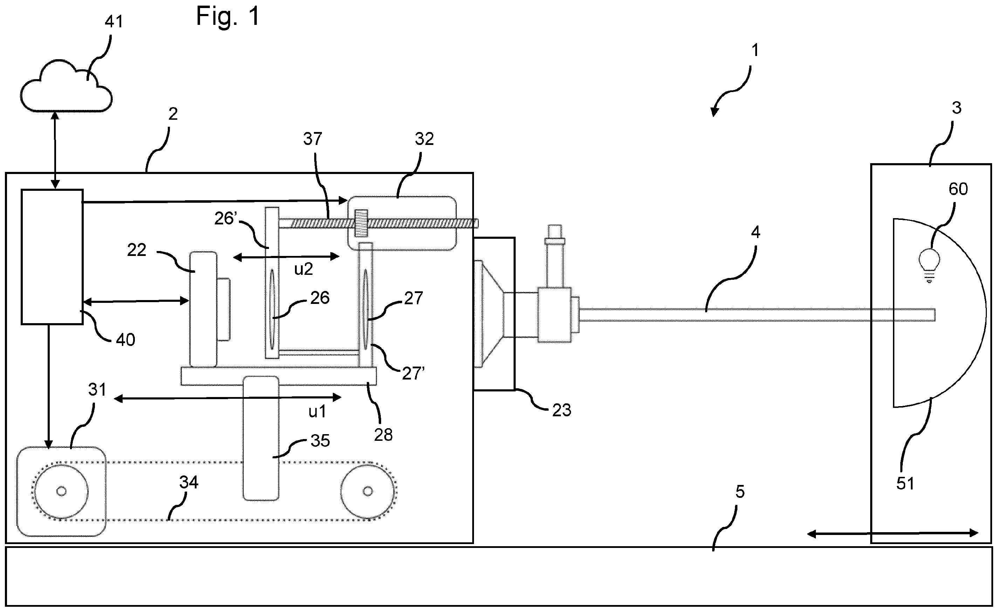

Figure 1 schematically shows a measuring device 1 for automatic testing of an optic according to an embodiment of the invention. In this case, the optic is an endoscope. The measuring device 1 comprises a first module 2 and a second module 3. The first module 2 comprises a camera 22, an optic mount 23 for mounting an endoscope 4 in front of the camera 22, and a lens system arranged between the camera 22 and the optic mount 23. The lens system is arranged to adjust a focus point of the camera 22 along a longitudinal axis of the endoscope 4. In this example, the lens system comprises a first lens 26 and a second lens 27. The first lens 26 is arranged in a first lens holder 26' and a second lens 27 is arranged in a second lens holder 27'. The second lens holder 27' is coupled to the camera 22 by means of a connection member 28. The first module 2 further comprises a first actuator 31 and a second actuator 32. The first actuator 31 is arranged to drive a belt 34 which is connected to a transmission member 35. This transmission member 35 transmits a movement of the belt 34 to the connection member 28. In this way the first actuator is able to adjust a position of the lens system relative to the optic mount 23. Figure 1 shows the range u1 in which the transmission member can move back and forth.

The second actuator 32 is arranged to move the first lens holder 26' and, as such, the first lens 26 relative to the second lens 27. In this example, the first actuator 32 comprises a spindle 37 which forces the first lens holder 26' away and to the first lens holder 27'. As a result, the first lens 26 can be moved in a range indicated by the arrow u2 relative to the second lens 27. It is noted that the actuators may be embodied by electrical motors arranged to drive a belt or spindle, or other driving means, using electric power. In an embodiment the first and/or second actuators are stepper motors, which can be controlled very accurately so as to move the focus point to very accurate locations along the optical axis.

The first module 2 further comprises a processing unit 40 which is arranged to control the first actuator 31 and the second actuator 32 and the camera 22. The processing unit 40 is further arranged to communicate with a remote computing system via a communication network 41.

In this example, the second module 3 comprises a semi-spherical image holder 51 for holding a test image (not shown). In this embodiment, a light source 60 is arranged in the second module 3 to provide light to the test image.

In an embodiment, the second module 3 is movable relative to the first module 2. For this purpose, a slider 5 is arranged, which comprises guiding means for guiding the first and second module along its longitudinal direction. In this embodiment, the second module 3 comprises a housing in which an opening is arranged to receive a tip of the endoscope 4. By suitable setting a focus point of the camera 22 and by placing the second module 3 relative to the first module 2, a photo can be made from the test image. Placing of the second module 3 relative to the first module 2 may be done by manually moving the second module 3 along the slider 5. Alternatively, or additionally, a mechanism for motorized movement of the second module 3 may be arranged in the measuring device 1. The same accounts for movement of the first module 2.

In this embodiment, the first actuator 31 is arranged to move the entire camera-lens assembly closer to or further from the endoscope 4, while the second actuator 32 is arranged to move the first lens 26 closer to or farther from the second lens 27. Together, these actuators determine the focal length.

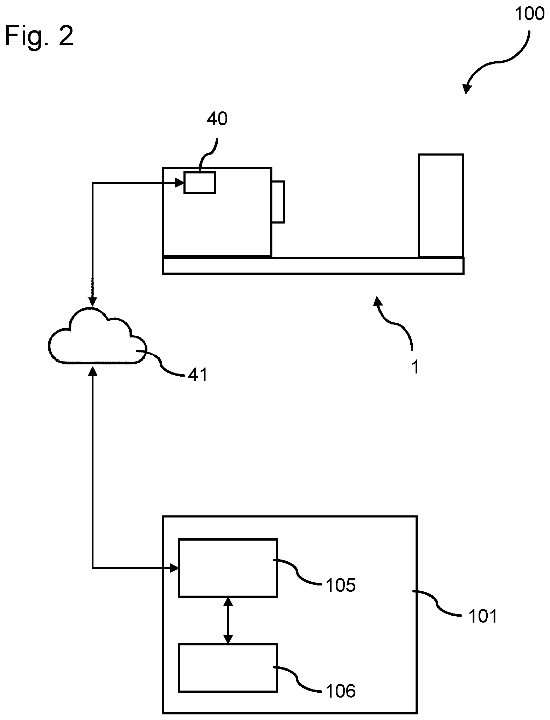

Figure 2 schematically shows a system 100 for automatic testing of an optic according to an embodiment of the invention. The system 100 comprises a measuring device, such as the device 1 shown in Figure 1, and a computing system 101. The computing system comprises one or more processing units 105 and a memory 106. The processing units 105 may be arranged to communicate with the measuring device 1 via the communication network 41. For communication, further I/O modules may be arranged in the computing system 101 and/or the measuring device 1, as will be appreciated by the skilled person. In an embodiment the computing system 101 is arranged to receive measurement data from the processing unit 40 of the measurement device 1. The measurement data may be stored in the memory 106. The stored data may be used to analyse image data in order to determine the quality of the endoscope 4, or another optical device.

It is noted that in this embodiment, the computing system 101 is separated from the measurement device 1 and communication is executed via the network 41. Alternatively, at least part of the computing system 101 may be arranged in the measurement device 1 so as to be able to perform the complete testing method within the measurement device 1. In that case, data communication with the computing system 101 can be limited or even avoided.

Returning back to Figure 1. Figure 1 shows the lens 26 in the intermediate position of a measurement. At a start of a test procedure a measurement is performed with the first lens 26 positioned close to the second lens 27. During the test procedure, the first lens 26 is removed away from the second lens 27 in small steps, with the first lens 26 gradually moving to the camera 22. In an embodiment, the range of the distance u2 is between 0 to 20,000 units, which units in this case directly relate to the number of steps of the stepper motor 32. Images are taken after a certain number of motor step, for example after every 80 steps.

After each step, the camera's exposure time may be adjusted to keep the brightness constant over the images taken. Then, a sharpness value is determined using the Tenengrad algorithm. The obtained sharpness values are stored and are used to generate a sharpness profile along the length of the endoscope 4.

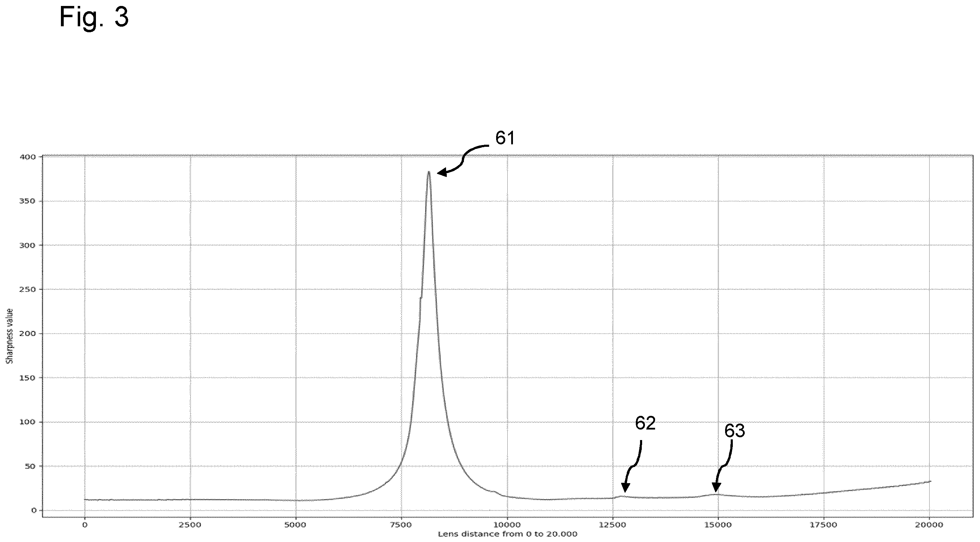

Figure 3 shows an example of a sharpness profile. In the graph of Figure 3, the vertical axis represents the lens sharpness value and the horizontal axis represents a distance from the first lens 27 given in units ranging between 0 and 20.000. As can be seen from Figure 3, the profile shows a large first peak 61 around 8000. Furthermore, some small peaks are found around 13000, see peak 62, and around 15000, see peak 63. These local peaks in the sharpness profile may be identified by way of calculating a first derivative of the curve (i.e. the profile) and looking for zero crossing of the derivative.

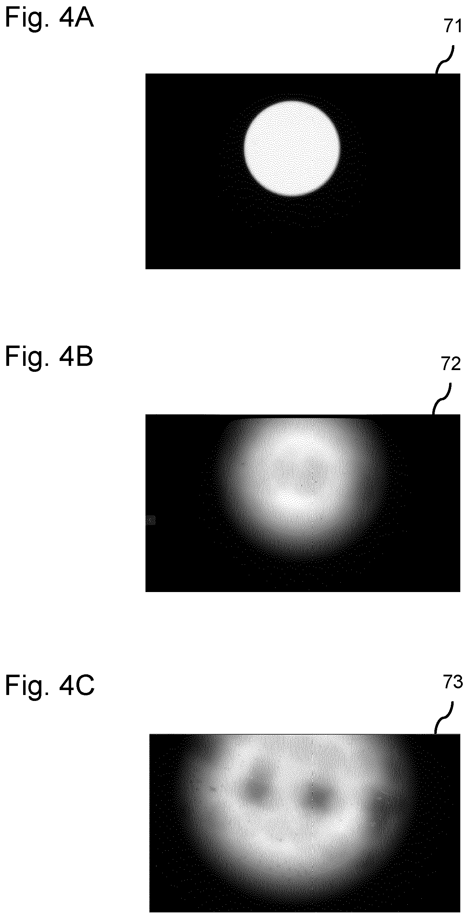

After the local peaks have been identified, the lens system is adjusted so as to move the focus point back to the locations of these peaks, after which a sharp photo is taken again, preferably with more time for optimal exposure time determination. Figure 4A shows an image taken at the location of the first peak 61. It is noted that an endoscope consists of spacers, lenses and glass tubes. The biggest sharpness peak shown in Figure 3 is probably focusing exactly on the edge of such a spacer. Figure 4B shows an image taken at the location of the second peak 62, and Figure 4C shows an image taken at the location of the third peak 63. Each of these photos is then saved and added to the series of sharp images found. In an embodiment, for a single tested optic, a number of sharp images is used to determine the quality of the optic.

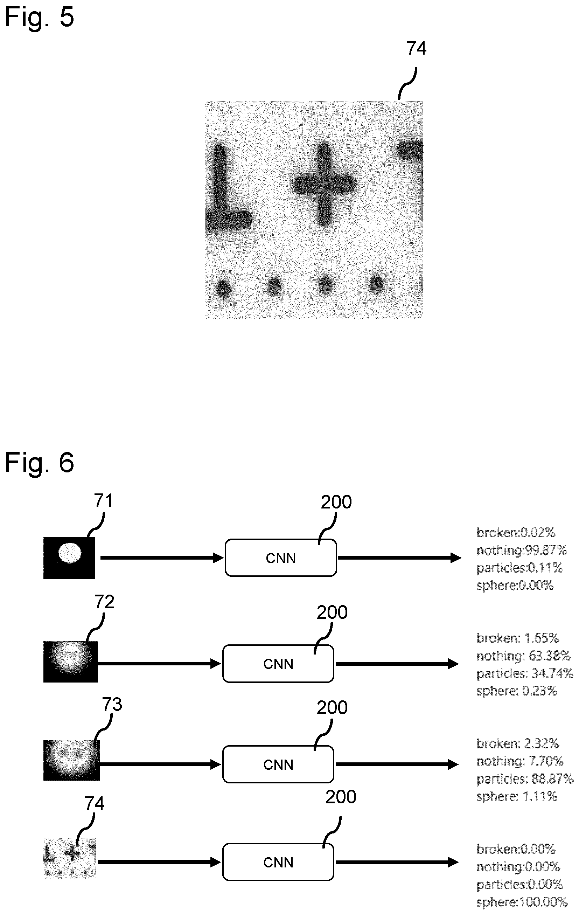

As a final step, the first lens 26 is brought to the extreme position as far removed from the second lens 27 as possible. The entire lens assembly is brought closer to the endoscope 4 by means of first actuator 31. This results in a focus point being position beyond the tip of the endoscope 4. An image is taken of the test image, which is shown in Figure 5. Based on this image, the LT (light transmission) value of the optic may be determined. The LT value can be compared to a known reference value obtained from a perfect optic. A percentage is then calculated by dividing the LT value by the reference value. This percentage can be used to qualify the optic by indicating how closely it matches the ideal performance.

It is noted that instead of using the Tenengrad algorithm, several other algorithms can be considered as alternatives to determine the sharpness of the image. A first alternative is the Laplacian variance method which involves applying the Laplacian operator to the image to highlight areas of rapid intensity change. The variance of the resulting image is then calculated, providing a measure of focus. This method is computationally efficient and tends to work well for images with pronounced edges. A further alternative is using the Wavelet Transform wherein an image is decomposed into various frequency components, enabling the analysis of both spatial and frequency domains. The sharpness can be assessed by examining the high-frequency wavelet coefficients. A third alternative is the Gray-Level Co-occurrence Matrix (GLCM) method which is a statistical method that examines the spatial relationship between pixels in an image. By analysing the co-occurrence matrix, one can derive features such as contrast, correlation, and energy, which are indicative of image sharpness. This method is particularly effective for texture analysis. All these methods compute the gradient magnitude of the image and are effective for focus assessment.

In an embodiment, the method comprises the uploading of the images into a remote computing device and analysing the photos by a trained CNN (convolutional neural network). In an embodiment, the CNN is arranged to generate four output values per image. The output values may comprise 'broken' indicative of a broken part in the optic, 'nothing' indicative of a good quality optic, 'particles' indicative of an optic having one or more particles in the interior, and 'sphere' indicative of an image taken from the semi-spherical test image located at the second module 3, see Figure 1. Adding the test image to the training set and to the classification of the images, results in an improved qualification method of the optic. It is useful for the model to know the difference between internal images of the optic and external images of the sphere / test image. Because sometimes a blurry sphere image is vaguely visible in the background when still focusing inside the optic. And this vague sphere image should not be seen as a fungus / particle or other defect.

Figure 6 shows the images 71,72,73,74 of Figures 4A, 4B, 4C and 5 as input for a trained CNN 200. At the right side of Figure 6 typical values of the outputs are listed. As such, the trained CNN 200 is able to classify the images, wherein the images are classified into four classes, the classes being 'broken' (i.e. a broken part of the optic is detected), 'nothing' (i.e. nothing is found), 'particles' (i.e. a location in the optic is found with unwanted particles), and 'sphere' (i.e. the test image is recognized).

It is noted that often, for one input image, several outputs of the CNN 200 will have values higher than zero. This is a normal outcome, even for well-trained neural networks. For example, at the output of image 72 both 'nothing' and 'particles' have values above 30%. Looking at the image 72, it can be seen that it is not a clean spot in the optic and the image is rather different from image 71, which is a clean image correctly classified as 'nothing', see the value of 99,87%.

In an embodiment of the method for automatic testing an optic, the highest output value is taken for a number of images taken for a single optic. So, if four images of one optic are input for the neural network, the following total scores are calculated: $total broken score = max \left(broken score of image i\right) , with i = 1 , 2 , 3 , 4$ $total particles score = max \left(particles score of image i\right) , with i = 1 , 2 , 3 , 4$

In an embodiment, if the value for *total broken score >* 50%, then the optic test fails on 'broken'. If the value for *total broken score <* 50% and *total particles score >* 50%, then the test method will give a warning on the presence of particles. If the value for *total broken score >* 50%, and also the value for *total particles score >* 50%, then the qualification 'broken' takes precedence over the qualification 'particles', and the system will therefore output a FAIL message instead of a WARNING message.

The system 100 may comprises an output device, such as a display in communication with the measuring device 1 and/or the computing system 101. In an embodiment, the system is arranged to show a message on the display like PASS / FAIL on the basis of the qualification determined by the learning model. A warning message may be shown in case of particle detection without a detection of a broken optic.

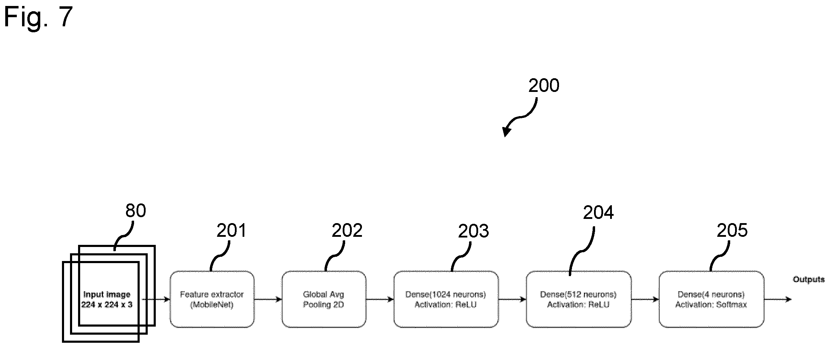

Figure 7 schematically shows the CNN 200 according to an embodiment of the invention. After a training session, multiple colour images are processed by the CNN 200 for classification. First each colour image is converted into three colour channels containing the pixel values for red, green and blue. The pixel values are divided by 255 to bring them between 0 and 1. Then these values are input for the network. In the example of Figure 7, the CNN 200 comprises a feature extractor 201, a pooling layer 202, a first fully connected layer 203, a second fully connected layer 204, and an output layer 205.

In this embodiment, the feature extractor 201 comprises an instance of the pre-trained MobileNet, where the top layer (i.e. the last layer) has been removed and rest of the layers frozen so that the pre-trained filters are preserved. The MobileNet is pre-trained on the data set called 'ImageNet' which is a data set comprising a large number of images. MobileNet is a family of CNN architectures designed by Google for image classification, object detection, and other computer vision tasks. Reference is made to the repository github.com/tensorflow/models/tree/master/ research/slim/nets/mobilenet.

In the example of Figure 7, the CNN 200 further comprises a number of newly trained layers added to the feature extractor 201. The pooling layer 202 is arranged to flatten the feature map into one vector. In this example, the pooling layer 202 comprises a layer implemented using the function GlobalAveragePooling2D(7,7,1024) having a feature map of 7 x 7 as an input and an output vector of 1024 values.

A pooling layer is one of the building blocks of Convolutional Neural Networks. Its function is to reduce the spatial size of the representation to reduce the number of parameters and computation in the network. It is mainly used to reduce the dimensions of the feature map. Pooling also provides an approach to down sample feature maps by summarizing the features present in a region of the feature map generated by convolutional layer. The GlobalAveragePooling2DQ layer performs down sampling by computing the mean of the height and width dimensions of the input. It is noted that instead of the GlobalAveragePooling2D() function other functions could be used such as the AveragePooling2D() function or MaxPooling2D().

The first fully connected layer 203 can be implemented using the function Dense(1024, ReLU), which creates a fully connected layer having an output of 1024 neurons. The ReLU activation function has the form: f(x) = max(0, x) and outputs the maximum between its input and zero. The purposes of the first fully connected layer 203 is to learn the more complex patterns from the extracted features. The second fully connected layer 204 can be implemented using the Dense(512, ReLU) function. It outputs 512 values which have only value equal to or above zero. This second fully connected layer is for further abstraction and reduction of the de features (dimension). The output layer 205 can be implemented using the function Dense(4, Softmax), which creates a fully connected layer having 4 neurons. The purpose of this layer is to classify the input images into four classes. In this case, the outputs of these 4 neurons represent the classes: 'broken', 'nothing', 'particles', 'sphere'.

The method for automatic testing an optic according to an embodiment comprises the training of the neural network 200 using a training set comprising images of cross sections of an optic. The training set may comprise a number of 'broken' images being images with signs of a broken optic, a number of 'nothing' images with no signs of any issues, a number of 'particle' images with signs of particles inside the optic, and a number of 'sphere' images with one or more features of a test image. In one of the training sessions, a dataset used by the inventors consisted of 321 'broken' images, 1670 'nothing' images, 863 'particle' images, and 740 'sphere' images.

In an embodiment, the method for automatic testing an optic comprises a data augmentation step. This can be used to expand the training data, reduce overfitting, and make the model more robust. The data augmentation of the training data may comprise several image processing techniques, such as rescaling, rotation, horizontal shift, vertical shift, shearing, zooming in and out, horizontal flipping images, and adding pixels.

Some examples of the image processing techniques are now listed. A rescaling of the images with a rescale factor equal to 1/255. Normalizing pixel values between 0-1. Random rotation between -20° and 20°. Random Offset up to 20% of the width. Random Shift up to 20% of the Height. Shearing by applying a slight slope to the image. Random zoom in or out up to 20%. Increasing variation in training by flipping images. Adding pixels on transformations so that no gaps are created.

For training the neural network 200, an 80-20 split of the available training set may be used, wherein 80% of the data is used for training, and 20% is used for validation. The training phase can be terminated using a criterion that check if any further improvement in classifying is noticed. Once the training phase is completed, the neural network 200 can be used to feed new images for classification.

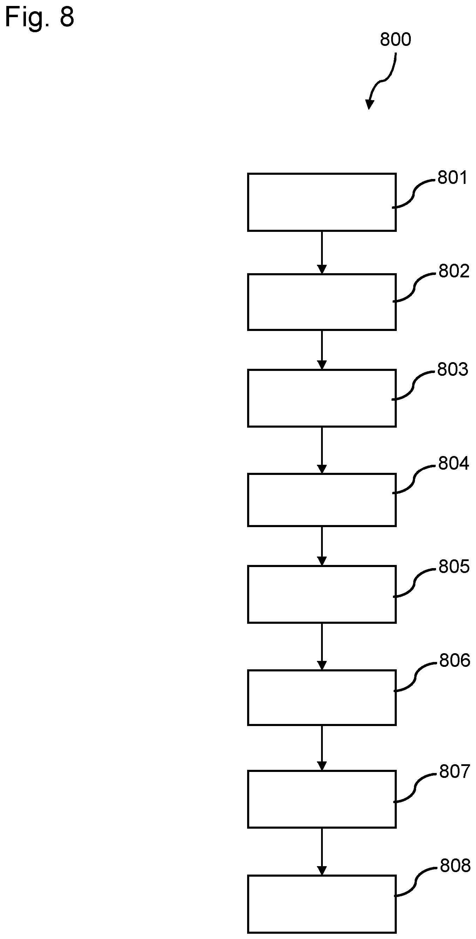

Figure 8 shows a flow chart of a method 800 for testing of an optic according to an embodiment of the invention. The method 800 comprises controlling 801 a camera and a lens system of a measuring device, so as to move the focus point of the camera to different locations along a longitudinal axis of the optic. The method proceeds to registering 802 a number of images taken by the camera. In this embodiment, the method proceeds with determining 803 a sharpness value for the images and storing 804 the obtained sharpness value for multiple images to obtain a sharpness profile along the longitudinal axis of the optic. The method then proceeds by identifying 805 local peaks in the sharpness profile, and by feeding 806 the images taken at the locations of the local peaks to a machine learning model, such as a trained neural network. Finally, the method comprises classifying 807 the images using the output of the machine learning model, and then determining 808 a qualification of the optic using the classification of the images. Once the quality of the optic is determined, the quality of the optic can be used to send a message to a user to decide whether the optic should be repaired, re-used or taken out of order.

In another aspect, the present disclosure provides for a computer program comprising instructions configured to, when loaded on one or more processing units of a computing device, perform the method as described above. The computer program may be a program written in Python or any other suitable programming language. The computer program may be a computer program product comprising a non-transitory tangible computer readably medium having computer-readable instructions thereon.

The present invention is very suitable for testing medical optics, such as an endoscope, a laparoscope, an arthroscope, a bronchoscope or urology optics, which provide a view of parts in the human and/or animal body to be examined and/or treated.

The present invention has been described above with reference to a number of exemplary embodiments as shown in the drawings. Modifications and alternative implementations of some parts or elements are possible as long as they are included in the scope of protection as defined in the appended claims. It should be noted that the above-mentioned embodiments illustrate rather than limit the invention, and that those skilled in the art will be able to design many alternative embodiments within the scope of protection as defined in the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A system (100) for automatic testing of an optic (4), such as an endoscope, the system comprising a measuring device (1) and a computing system (101), wherein the measuring device (1) comprises a camera (22), an optic mount (23) for mounting the optic in an optical path of the camera, and a lens system arranged in the optical path of the camera between the camera and the optic mount, wherein the lens system is arranged to adjust a focus point of the camera along a longitudinal axis of the optic, and wherein the computing system is arranged to control the camera and to control the lens system to automatically adjust the focus point, wherein the computing system (101) is further arranged for:
- controlling the lens system so as to move the focus point of the camera to different locations over the longitudinal axis;
- registering a number of images taken by the camera;
- processing at least some of the images using a machine learning model trained to classify images;
- use an output of the machine learning model to determine a qualification of the optic.

2. The system according to claim 1, wherein processing at least some of the images comprises:
- determining a sharpness value for the images;
- storing the obtained sharpness value for the images to obtain a sharpness profile along the longitudinal axis of the optic;
- identifying local peaks in the sharpness profile;
- feeding peak images, which are those images that are taken at the locations of the local peaks, to the machine learning model.

3. The system according to claim 1 or 2, wherein registering a number of images comprises adjusting the camera's exposure time to keep the brightness constant over the images taken.

4. The system according to any one of the preceding claims, wherein the computing system is arranged to register focus point location data for each image.

5. The system according to any one of the preceding claims, wherein the camera is a digital video camera.

6. The system according to any one of the preceding claims, wherein the computing system is arranged to, before feeding the images to the machine learning model, adjust the lens system or camera so as to move the focus point back to the locations of the local peaks, and control the camera to take further images at the locations of the peaks.

7. The system according to any one of the preceding claims, in dependence of claim 2, wherein the sharpness of the image is determined using the Tenengrad algorithm.

8. The system according to claim 1, wherein processing at least some of the images comprises:
- encoding the at least some of the images into compressed or abstract feature representations;
- feeding the images or feature representations to the machine learning model.

9. The system according to any one of the preceding claims, wherein the machine learning model comprises a convolutional neural network (CNN).

10. The system according to claim 9, wherein the convolutional neural network (200) comprises:
- a feature extractor (201),
- a pooling layer (202),
- a first fully connected layer (203),
- a second fully connected layer (204), and
- an output layer (205).

11. The system according to claim 10, wherein the feature extractor comprises multiple layers of a pre-trained convolutional neural network, such as MobileNet.

12. The system according to claim 10 or 11, wherein weights between the first fully connected layer and the second fully connected layer are adjusted by the computing system (100) during a further training phase using a data set comprising images of optics of the same type, or similar type, as the optic to be tested.

13. A method for automatic testing of an optic, the method comprising:
- controlling (801) a camera and a lens system of a measuring device, so as to move the focus point of the camera to different locations along a longitudinal axis of the optic;
- registering (802) a number of images taken by the camera;
- processing at least some of the images using a machine learning model trained to classify images;
- using an output of the machine learning model to determine a qualification of the optic.

14. The method according to claim 13, wherein processing at least some of the images comprises:
- determining (803) a sharpness value for the images;
- storing (804) the obtained sharpness value the images to obtain a sharpness profile along the longitudinal axis of the optic;
- identifying (805) local peaks in the sharpness profile;
- feeding (806) peak images, which are those images that are taken at the locations of the local peaks, to the machine learning model.

15. A computer program comprising instructions configured to, when loaded on one or more processing units of a computing device, perform the method according to claim 13 or 14.
